(19) Europäisches Patentamt
European Patent Office
Office européen des brevets

(11) **EP 4 440 072 A1**

(12) **EUROPEAN PATENT APPLICATION**

(43) Date of publication:
**02.10.2024 Bulletin 2024/40**

(51) International Patent Classification (IPC):
*H04L 45/302* (2022.01)  *G06N 5/01* (2023.01)
*H04L 41/12* (2022.01)  *H04L 45/00* (2022.01)
*H04L 45/42* (2022.01)  *H04L 47/56* (2022.01)

(21) Application number: **23305435.2**

(22) Date of filing: **29.03.2023**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.**
**1119 NS  Schiphol Rijk Amsterdam (NL)**
Designated Contracting States:
**FR**
• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI GB GR HR HU IE IS IT LI LT LU LV MC ME MK MT NL NO PL PT RO RS SE SI SK SM TR**

(72) Inventors:
• **COUSINEAU, Denis**
**35708 Rennes Cédex 7 (FR)**
• **BOYER, Benoit**
**35708 Rennes Cédex 7 (FR)**

(74) Representative: **Plasseraud IP**
**104 Rue de Richelieu**
**CS92104**
**75080 Paris Cedex 02 (FR)**

(54) **MODIFICATIONS OF THE TOPOLOGY OF A TIME-SENSITIVE NETWORK TO ALLOW AN EFFECTIVE SCHEDULING**

(57)    The invention relates to a computer-implemented method comprising: obtaining: a topology of a deterministic Ethernet network; and a set of critical streams to instantiate in the network, each critical stream being defined by at least a path, a period, a maximum allowed end-to-end latency, a set of packets, each packet being associated to a size ; generating, from said set of critical streams, a SMT instance comprising formulas that express the constraints that must be complied with by the transmissions of the packets of the streams, and variables defining the configuration of the network ; executing a SMT solver to solve the SMT instance and obtain values of said variables defining the configuration of the network that satisfies the set of formulas ; if the execution of the SMT solver is not successful, defining at least one modification of the topology of the network based on an analysis of an unsatisfiable core of the SMT instance returned by the SMT solver.

EP 4 440 072 A1

S1 — Obt top, strms

S2 — Gen SMT inst

S3 — Exec SMT solv

S4 — Succ?

No

S5 — Def Mod Top

P2

**FIG. 2**

**Description**

**Technical Field**

This disclosure pertains to the field of time sensitive networks. More specifically, it pertains to the field of solving time sensitive network scheduling problems.

**Background Art**

Ethernet networks provide a solution for performing communications between components of a system. For example, Ethernet networks can be deployed in systems such as cars, planes, medical devices etc. to provide a support for the emission and reception of messages between the components of the system. For example, in a car, a central computer may receive messages from various sensors, and send messages to actuators (e.g brakes, motor...) through an Ethernet network to control the vehicle.

When such a system is a critical system, real-time communications are needed. For instance, in Automotive, the in-car network must use real-time communications, because it must deliver messages to Electronic Power Units (EPUs) in charge of controlling brakes or regulating the speed. Usual Ethernet networks cannot be used for such a purpose because they do not have real-time communication feature. Even if Ethernet offers reasonable mechanisms to ensure fairness between communication streams, such as Quality of Service (QoS) that introduces message priorities that allow to favour critical messages, standard Ethernet networks does not provide any guarantee regarding the strong deadlines. Therefore, some critical messages might not reach their destination before the expected deadline in a standard Ethernet network. This situation is not acceptable in critical systems.

Time Sensitive Networks (TSNs) have been designed to provide Ethernet with real-time mechanisms. The standard TSN allows to force the switches to send packets from a given class at a given time. Switches are setup using a Gate Control List (GCL) for each port, defining the moments packets of a given class are sent. One general objective of the TSNs is therefore to calculate the GCL such that the end-to-end delay of critical streams are respected. This calculation can be done statically.

In substance, such calculation of the setup of the TSN must be done for all the gates at all times. As streams might not share the same period, it is necessary to find a full scheduling for all the streams statically to consider the hyper-period, *i.e.,* the least common multiple (lcm) of the periods. Indeed, the scheduling problem must be solved for any interleaving of the streams' periods. Upon the resolution of a TSN scheduling problem, we obtain a variable for each tuple of a stream, a switch in the path of the stream, a packet to be sent during the stream's period and a period occurrence during the hyper-period.

Craciunas, S. S., Oliver, R. S., & Ag, T. (2017). An overview of scheduling mechanisms for time-sensitive networks. Proceedings of the Real-time summer school LÉcole dÉté Temps Réel (ETR), 1551-3203. proposed a logical formalization of the TSN scheduling problem, in which the problem variables are the time stamps corresponding to the emission, by a switch, of a given packet from a given stream (also called gates). The constraints are explained using mathematical of logical formulas wherein the variables are opening and closing times of the gates of the switches of the network, and the problem is solved using SMT (Satisfiability Modulo Theories). The formalization expresses the problem as constraints in the SMT-lib language. These constraints can then be sent to some SMT-solver (e.g., Z3, Alt-Ergo, CVC4...) that might find a solution.

The approach proposed by Craciunas provides a practical tool for solving TSN scheduling problems. The European patent application n°EP23305434.5 proposes to transform the set of streams to reduce the number of constraints to comply with.

However, the approach proposed by Craciunas does not allow to identify the changes to perform to a network to make a network schedulable, if no solution is found.

There is therefore the need for a method allowing to identify changes to apply to Time Sensitive Networks in order to be able to comply with hard real-time constraints.

**Summary**

This disclosure improves the situation.

It is proposed a computer-implemented method comprising: obtaining: a topology of a deterministic Ethernet network; and a set of critical streams to instantiate in the network, each critical stream being defined by at least a path, a period, a maximum allowed end-to-end latency, a set of packets, each packet being associated to a size ; generating, from said set of critical streams, a SMT instance comprising formulas that express the constraints that must be complied with by the transmissions of the packets of the streams, and variables defining the configuration of the network ; executing a SMT solver to solve the SMT instance and obtain values of said variables defining the configuration of the network that satisfies the set of formulas ; if the execution of the SMT solver is not successful, defining at least one modification of the topology of the network based on an analysis of an unsatisfiable core of the SMT instance returned by the SMT solver.

By "topology of an Ethernet network", we designate a set of attributes that define the network, which comprise the node (switches and end nodes), links, and a flow rate of each link.

By "deterministic Ethernet network", we designate an Ethernet network which is able to implement real-time behavior for at least a part of the communication in the network. Examples of deterministic Ethernet networks comprise networks that complies with the TTEthernet or Time-Sensitive Network (TSN) frameworks. Deterministic Ethernet networks may notably be obtained by implementing the fault tolerant clock synchronization mechanism under the standard IEEE 802.1ASrev defined in Institute of Electrical and Electronics Engineers, Inc, "Time-Sensitive Networking Task Group," http://www.ieee802.org/1/pages/tsn.html, 2016, retrieved 06-Jul-2016, and/or the network-wide reference and mechanisms defining end-to-end timing of communication streams under the standard IEEE 802.1Qbv defined in Institute of Electrical and Electronics Engineers, Inc, "802.1Qbv-Enhancements for Scheduled Traffic," http://www.ieee802.org/1/pages/802.1bv.html, 2016, draft 3.1.

By "stream", we designate a periodic data transmission from a sender node (also called talker) to one or more receiver nodes (also called listeners).

By "critical stream", we designate a stream for which a end-to-end latency must be complied with at each period.

By "path of a stream", or "route of a stream" we designate a series of nodes of the network through which the stream flows.

By "constraint", we designate a real-time constraint which applies to the streams. Such constraints may be for example:

- frame constraints. Such constraints typically comprise constraints relative to emissions of packets in a time frame, for example the order of emission of the packets by a stream;
- link constraints. Such constraints typically contain constraints relative to the size and data rate of the links;
- stream transmission constraints. Such kinds of constraints may for example comprise constraints representative of the transmission and reception of packets. For example, that a packet must be received at a switch from a first link before being transmitted on a second link; that two packets cannot be sent in the same time on the same link, etc;
- end-to-end constraints: Such constraint may for example represent the maximum delay between the emission of a packet and its reception.

By "sender", we designate a node that emits the packets of a stream.

By "receiver", we designate a node that receive packets of a stream.

By " Satisfiability Modulo Theories (SMT) instance", we designate an instance of a Satisfiability Modulo Theories (SMT) problem that comprises a plurality of equations depending upon the values of variables. The solving of the SMT instance designates the identification of a solution, i.e. a set of values of the variables, that satisfies all the mathematical or logical formulas. A "SMT instance" is an expression in a SMT language of formulas and variables that can be fed to a SMT solver. The invention is not restricted to a specific ATP or SMT language and could use for example the SMT-lib language or the CVC language.

By "formula", we designate first-order logic or mathematical formulas that belongs to mathematical fields such as the theories of linear integer arithmetic, linear real arithmetic, etc. For example, (x>2 and x<1) or (2+x=2-x) are mathematical formulas that are satisfied with the instantiation x=0.

By "generating a set of mathematical formulas that express the constraints that must be complied with by the network", we designate defining mathematical formulas that are equivalent to the constraints implied by the transformed set of critical streams to comply with the real-time requirements of the streams. Each mathematical formula may for example be an equation or an inequation and represent a constraint caused by two packets of two different streams. The generation of mathematical formulas from a set of streams is for example described by *"Craciunas, S.S., & Oliver, R.S. (2017). An Overview of Scheduling Mechanisms for Time-sensitive Networks."*.

By "variable defining the configuration of the network", we designate variables defining the behavior of the switches of the network, for example the status of the gates of the switches at each time of the hyperperiod of the set of streams.

By "SMT solver", we designate a computer-implemented tool which is configured to solve a SMT instance, that is to say to demonstrate if a solution (e.g a set of values of the variables that satisfy all the constraints) can be brought or not to the SMT instance. The SMT solver may be for example Z3, CVC4, Alt-Ergo, VeriT.

By "solving the SMT instance", we designate identifying values of variables that satisfy all the mathematical formulas.

By "a configuration of the network", we designate a set of rules to be followed by the switches of the network. For example, if the network complies with the TSN framework, the set of rules may be the times at which each gate of each switch is open or close.

By "unsatisfiable core of the SMT instance", we designate a subset of the formulas that cannot be satisfied simultaneously and prevent the SMT solver to successfully solve the SMT instance.

By "an analysis of an unsatisfiable core", we designate an analysis of the appearance of the elements of the network in the unsatisfiable core returned by the SMT solver. Such an analysis may for example comprise one or more of:

- a determination of the elements of the network that appear in the unsatisfiable core ;
- a statistical analysis of the unsatisfiable core, which may comprise one or more of :

  ◦ a count of the number of appearance of each element in the unsatisfiable core ;
  ◦ a count of the relative number of appearance of each element in the unsatisfiable core;

- Etc...

By "modification of the topology" of the network, we designate a modification of the topology which comprises for example:

- one or more increase of the speed of links ; and/or
- one or more modification of the architecture of the network, that may comprise for example the addition of a link, and/or an addition of a switch.

The unsatisfiable core returned by the SMT solver in case of unsuccessful resolution of the SMT instance indicates all the formulas, and thus all the constraints of the network that cannot be satisfied and prevents solving the SMT instance.

The analysis of the unsatisfiable core therefore allows identifying the elements of the network that are associated with unsatisfiable constraints and/or that are the most frequently associated with unsatisfiable constraints.

A modification of the topology of the network according to this analysis is therefore likely to allow scheduling the network, or at least reduce the number of unsatisfied constraints.

In another aspect, it is proposed a computer software comprising instructions to implement at least a part of a method as defined here when the software is executed by a processor.

In another aspect, it is proposed a computer-readable non-transient recording medium on which a software is registered to implement the method as defined here when the software is executed by a processor.

The following features, can be optionally implemented, separately or in combination one with the others:

Advantageously, the computer-implemented method comprises, if the execution of the SMT solver is successful, configuring the network according to said topology and said obtained values defining the configuration of the network.

By "configuring the network", we designate setting the values of variables defining the configuration, for example to configure the switches of the network. If needed, this can also comprise a manufacturing or physical modification of the network according to the topology. According to different embodiments of the invention, this may be performed for example by one or more of:

- configuring a pre-existing network, for example by setting the values of variables that govern the behavior of the switches that govern the behavior of the network ;
- modifying the topology of an existing network; then setting the values of variables that govern the behavior of the switches that govern the behavior of the network. This may comprise for example modifying the speed of the links, and/or modifying the architecture of the network;
- manufacturing the network according to its topology, then setting the values of variables that govern the behavior of the switches that govern the behavior of the network.

This allows configuring the network to ensure that the time constraints of the critical streams will be complied with.

Advantageously, the computer-implemented method comprises, until the execution of the SMT solver is successful, at least one iteration of: applying said at least one modification of the topology of the network ; modifying said SMT instance according to said at least one modification of the topology of the network ; going back to said step of executing the SMT solver.

This allows modifying the topology of the network, and running the SMT solver until finding a topology of the network that permits the satisfaction of all the constraints. Over the successive iterations of execution of the SMT solver, statistical analysis of the unsatisfiable core may allow identify successive modifications to perform until the SMT solver identifies a solution for meeting the constraints.

Advantageously, said step of defining at least one modification of the topology of the network based on said analysis of the unsatisfiable core of the SMT instance returned by the SMT solver comprises: defining a plurality of candidate modifications of the topology of the network based on the analysis of the unsatisfiable core of the SMT instance ; for each candidate modification of the topology of the network of said plurality of candidate modifications respectively: applying said candidate modification to said SMT instance to obtain a modified SMT instance ; executing the SMT solver on said modified SMT instance; displaying the candidate modifications of the topology of the network that cause a successful execution of the SMT solver ; receiving an input relative to a selection of one of said candidate modifications of the topology of the network that cause a successful execution of the SMT solver; defining said at least one modification of the topology of the network as the selected candidate modification of the topology of the network.

This allows defining a modification of the topology of the network that complies with the real-time constraints of the streams, and is validated/selected by a user Furthermore, the user is presented with a limited choice of successful candidate modifications.

Advantageously, said step of defining at least one modification of the topology of the network based on said analysis of the unsatisfiable core of the SMT instance returned by the SMT solver comprises : defining a plurality of candidate modifications of the topology of the network based on the analysis of the unsatisfiable core of the SMT instance ; displaying said plurality of candidate modifications of the topology of the network ; receiving an input relative to a selection of one of said candidate modifications of the topology of the network ; defining said at least one modification of the topology of the network as selected candidate modification of the topology of the network.

This allows selecting a plurality of candidate modifications that are the most likely to improve the ability of the SMT solver to solve the SMT instance, and letting a user select the candidate modifications to apply. Therefore, this allows applying the most relevant modifications while benefiting from a validation from an expert user.

Advantageously, said analysis is a statistical analysis.

The statistical analysis allows determining where the unsatisfiable constraints are located the most frequently, and therefore selecting a modification of the topology of the network that is able to release constraints where they most frequently appear, thereby increasing the likelihood of allowing a successful scheduling of the network and/or diminishing the number of constraints.

Advantageously, said at least one modification comprises an increase of the speed of at least one link that appears in the unsatisfiable core.

The increase of the speed of one or more links that appear in the unsatisfiable core, and thus prevent the SMT solver to solve the instance, increases the likelihood of allowing all the packets to transit in the links without needing to change the architecture of the network.

Advantageously, the computer-implemented method comprises a plurality of iterations of a modification consisting in increasing of the speed of the link which appears the most frequently in the unsatisfiable core, until the execution of the SMT solver is successful.

At each iteration, the link that is cited as the most frequent cause of lack of solution is upgraded. Therefore, a solution that implies a modification of a minimal number of links is iteratively obtained.

Advantageously, said at least one modification of the topology of the network comprises at least one modification of the architecture of the network.

By "architecture of the network", we designate the list and relative positions of the nodes, switches and links of the network, which define the nodes of the network, the link that allow communicating with the nodes and their respective positions and link lengths.

A modification of the architecture of the network allows a deeper modification of the scheduling problem, and thus further increases the ability of finding a suitable scheduling for the network.

Advantageously, said at least one modification of the architecture of the network comprises at least one addition of a link to the network.

This increases the routing options for the packets, and therefore eases the resolution of the constraints.

Advantageously, said at least one addition comprises a duplication of at least one link that appears in the unsatisfiable core.

Duplicating links allows significantly increasing the speed between nodes for a link that prevents the solving of the SMT instance, but also allows to send a plurality of packets in the same time, and therefore greatly increases the likelihood of solving the SMT instance.

Advantageously, said at least one addition comprises an addition of a direct link between two nodes separated by a series of successive links that all appear in the unsatisfiable core.

The separation of two nodes by a series of successive links that all appear in the unsatisfiable core indicates that there exists a traffic congestion between the two nodes. Adding a direct link between the two nodes therefore allows letting the traffic flow directly between the two nodes, and therefore reduces the congestion in all the link of the series of successive links.

Advantageously, said at least one modification of the architecture of the network comprises an addition of a switch in an area of the network that comprises a plurality of links that appear in the unsatisfiable core.

Adding a switch in an area wherein a plurality of links appear in the unsatisfiable core increases the number of possible routing options between the links, and therefore contribute to ease the solving of the SMT instance.

**Brief Description of Drawings**

Other features, details and advantages will be shown in the following detailed description and on the figures, on which:

**Fig. 1**

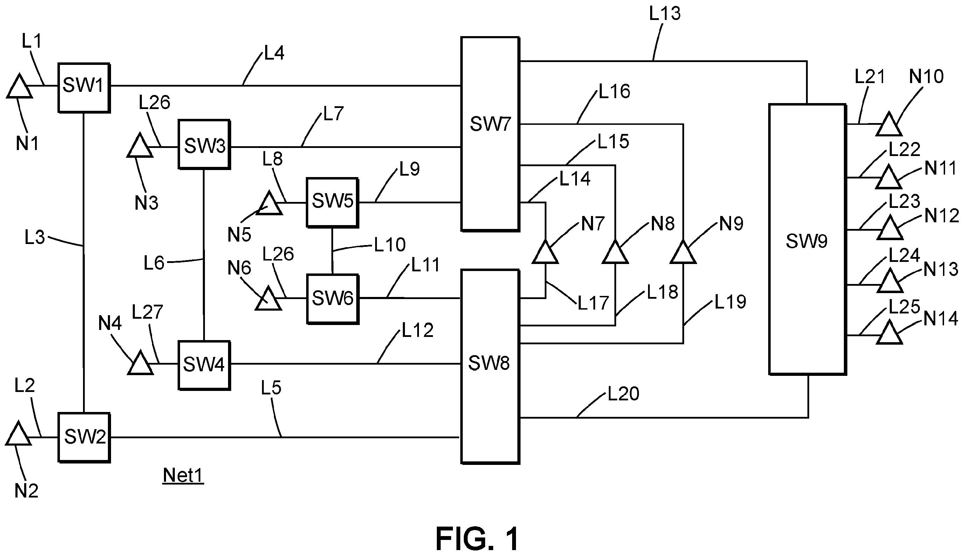

[Fig. 1] is a first example of a Time Sensitive Network for the scheduling of which the invention can be implemented according to an embodiment.

**Fig. 2**

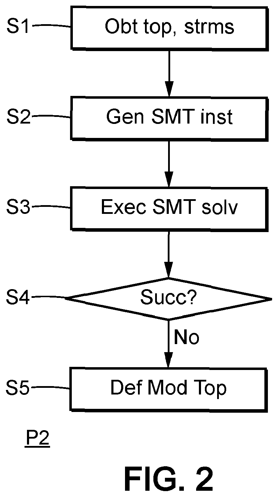

[Fig. 2] is a first example of a method according to an embodiment.

**Fig. 3**

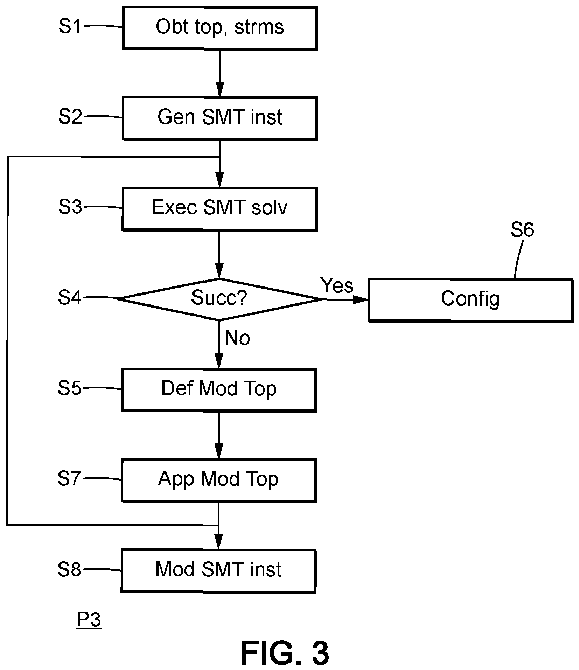

[Fig. 3] is a second example of a method according to an embodiment.

**Fig. 4**

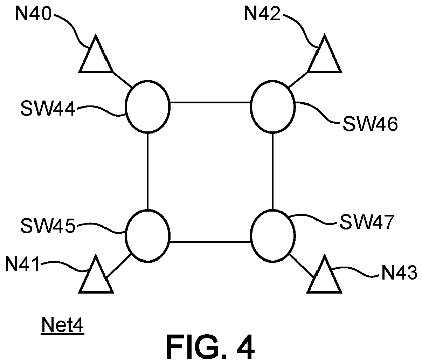

[Fig. 4] is a second example of a Time Sensitive Network for the scheduling of which the invention can be implemented according to an embodiment.

**Description of Embodiments**

It is now referred to figure 1.

Figure 1 represents a first example of a Time Sensitive Network for the scheduling of which the invention can be implemented according to an embodiment.

The network Net 1 comprises:

- 14 end nodes N1, N2, N3, N4, N5, N6, N7, N8, N9, N10, N11, N12, N13, N14 ;

- 9 switch nodes, or "switches" SW1, SW2, SW3, SW4, SW5, SW6, SW7, SW8, SW9 ;

- 27 links L1, L2, L3, L4, L5, L6, L7, L8, L9, L10, L11, L12, L13, L14, L15, L16, L17, L18, L19, L20, L21, L22, L23, L24, L25, L26, L27.

Each link allows a direct transmission of packets between two nodes. For example:

- Some links may allow a direct transmission of packets between an end node and a switch. For example, the link L2 allows a direct transmission of packets between the end node N2 and the switch SW2 ;
- Some links may allow a direct transmission of packets between two switches. For example, the link L3 allows a direct transmission of packets between the switch SW3 and the switch SW2.

Each end node may represent an element of a system. For example, if the network Net1 is implemented in a terrestrial vehicle, the end nodes may represent calculators, sensors, actuators, etc. The packets therefore represent the messages that are exchanged between these elements.

The list of nodes, switches and links, as well as the flow rate of each link, define the topology of the network.

The network Net1 is configured to let the streams flow between nodes. Each stream represents a communication between at least two end nodes.

The switches are statically configured to let packets of certain streams pass or not through "gates" that may be open or closed to let packets pass or not. The configuration of a switch can be performed through a "Gate Control List" (GCL) which defines the gates of the switch, and the times at which each gate is open or closed in the hyperperiod of the network.

A stream can be defined between a first end node, called "the sender" (or "the talker"), to one or more end nodes, called "the receivers" (or "the listeners"), and is defined at least by:

- a path, which defines the list of links and nodes followed by the stream from the sender to the one or more receivers. Different paths may be defined between a sender and a receiver. For example, if a stream is defined from the sender N3 to the receiver N8, may for example follow the path N3, L26, SW3, L7, SW7, L15, N8, or the path N3, L26, SW3, L6, SW4, L12, SW8, L18, N8 ;

- a period, which defines the period upon which the transmission of the packets must be repeated ;

- a maximum allowed end-to-end latency, which defines the maximum allowed time between the emission and reception of the packets ;

- a set of packets to send, each packet being defined by a size.

Therefore, the streams define a periodic transmission of packets, wherein a sender node periodically sends to one or more receiver nodes packets of a defined size, that must be transmitted on or before the end-to-end latency. This formalism defines the interaction that occur between the components of the system. For example, a stream may represent the measurements that are sent by a sensor to a central controller during a period, and the maximum allowed latency for the central controller to receive sensor measurement, the instructions that are sent by a central controller to an actuator during a period, and the maximum allowed latency for the actuator to receive the instructions from the central controller, etc.

Therefore, the configuration of the switches must allow each stream to comply with its maximum allowed latency for each period, so that the real time requirements of each stream is complied with. The determination of a configuration of the network that fulfils these needs is called a "TSN scheduling problem".

The configuration of the network is built upon the topology of the network, which defines a set of attributes that define the network, which comprise the node (switches and end nodes), links, and a flow rate of each link. Thus, the figure 1 represents in practice a part of the topology of the network (e.g the list of nodes and links between the nodes), while some elements of the topology, such as for example the speeds of each link, are not explicitly represented in the figure 1.

As will be explained in more details hereinafter, the invention allows modifying the topology of a deterministic Ethernet network in order to allow its scheduling.

It is now referred to figure 2.

Figure 2 represents a first example of a method according to an embodiment.

The method P2 is a computer-implemented method, that comprises a first step S1 of obtaining a topology of a deterministic Ethernet network, and a set of critical streams to instantiate in the network, each critical stream being defined by at least a path, a period, a maximum allowed end-to-end latency, a set of packets, each packet being associated to a size.

At the output of the first step S1, the initial topology of the network and the streams to instantiate are therefore known.

In a number of embodiments of the invention, the set of critical stream may result from one or more stream transformations that aim at reducing the number of constraints implied by the streams, as disclosed for example in the European patent application n° EP23305434.5.

The method P2 further comprises a second step S2 of generating, from said set of critical streams, a SMT instance comprising formulas that express the constraints that must be complied with by the transmissions of the packets of the streams, and variables defining the configuration of the network.

Stated otherwise, the step S2 consists in formulating a SMT instance wherein the variables are the configuration of the network, notably the GCL of the switches, and the formulas to solve defined the constraints, implied by the different streams and packets. The formulation of such a problem is for example described by "Craciunas, S.S., & Oliver, R.S. (2017). An Overview of Scheduling Mechanisms for Time-sensitive Networks." in the example of a SMT problem which is a specific type of ATP problem.

Few concrete illustrative examples of formulation of constraints are provided below.

In a first example:

- S1 and S2 are two streams whose paths pass through an L3 link,
- L1 is the predecessor of L3 in the path of S1,
- L2 is the predecessor of L3 in the path of S2,
- Pe1 and Pe2 are indices of periods of respectively S1 and S2, in the hyper-period, such that the corresponding periods of S1 and S2 overlap,
- Pa1 and Pa2 are packet indices of S1 and S2 respectively,

Then the constraints on the queue of the switch from which the link L3 arises can be formulated as:

$$((\Phi S1,L1,Pa1,Pe1 + TL1,S1 < \Phi S2,L2,Pa2,Pe2 + TL2,S2) \text{ AND } (\Phi S1,L3,Pa1,Pe1 < \Phi S2,L3,Pa2,Pe2))$$

OR

$$((\Phi S2,L2,Pa2,Pe2 + TL2,S2 < \Phi S1,L1,Pa1,Pe1 + TL1,S1) \text{ AND } (\Phi S2,L3,Pa2,Pe2 < \Phi S1,L3,Pa1,Pe1))$$

where:

- $\Phi S,L,Pa,Pe$ is the variable representing the gate corresponding to the passage of the packet Pa of the stream S on the link L during the period Pe;

- TL,S is the packet transmission time of the size associated with stream S on link L.

This constraint means in practice the following rule: "*Either the packet from S1 arrives before the packet from S2, and it leaves before, or the reverse*". Such kind of a constraints can be formulated in practice for each pair of streams that share a link in each overlapping periods, to ensure that the packets are sent successfully.

In a second example, using the same notations:

- S is a stream, L1 and L2 two consecutive links on the path of S,

Then, for each packet index Pa and each period index Pe:

$$\Phi S,L1,Pa,Pe + TL1,S < \Phi S,L2,Pa,Pe$$

This constraint can be means in practice the following rule: *"The packet must have arrived before leaving on the L2 link'*.

In a third example, an end-to-end constraint (i.e, a constraint regarding the end-to-end delay of a stream can be formulated as:

$$\Phi S,L2,Pa,Pe + TL2,S - \Phi S,L1,Pa,Pe < E2E\_delay(S)$$

Where L1 and L2 are the first and last links of the path of the stream S and E2E_delay(S) is the end-to-end delay of S.

The examples of formulations of constraints presented above are provided by means of non-limitative example only, and in practice the skilled man can envision all the constraints that can be formulated in a specific case. Rules of automatic generation of constraints can thus be applied to each stream, and to each pair of streams whose paths share at least one link or switch, for each partially overlapping period. The constraints can be generated in the languages of the ATP prover, or the SMT solver, that will be used.

This step S2 allows formalizing the problem of the scheduling of the network as a mathematical problem.

Indeed, if a solution of the problem can be found, the values of the variables define a configuration of the network which ensures that all constraints are met, that is to say a configuration of the network wherein all time requirements of all the critical stream are complied with.

On the other hand, if no solution can be found to the problem, no configuration of the network can be identified which allows complying with all the constraints.

The method P2 further comprises a third step S3 of executing a SMT solver to solve the SMT instance and obtain values of said variables defining the configuration of the network that satisfies the set of formulas.

At the fourth step S4, the method P2 verifies if the execution of the SMT solver is successful. A successful execution means that the SMT solver has been able to identify values of the variables that allow satisfying all the formulas, and therefore that a configuration of the network according to the values of variables allows ensuring that all the time constraints of the streams will be met.

On the other hand, an unsuccessful execution of the SMT solver means that no solution can be identified to the problem, and therefore that no configuration of the network allows ensuring that all the time constraints of the streams will be complied with.

The method P2 further comprises, if the execution of the SMT solver is not successful, a fifth step S5 of defining at least one modification of the topology of the network based on an analysis of an unsatisfiable core of the SMT instance returned by the SMT solver.

Stated otherwise, if the execution of the SMT solver is not successful, the SMT solver returns an unsatisfiable core, that comprises a unsatisfiable subset of constraints of the original problem and prevents solving the SMT instance, the unsatisfiable core is analyzed and at least one modification of the topology is defined according to the analysis.

The analysis of the unsatisfiable core therefore allows identifying the elements of the network that are associated with unsatisfiable constraints and/or that are the most frequently associated with unsatisfiable constraints. A modification of the topology of the network according to this analysis is therefore likely to allow scheduling the network, or at least reduced the number of unsatisfied constraints. Furthermore, the use of an analysis on the ground of an unsatisfiable core of a SMT solver is especially relevant, because the unsatisfiable core returned by the SMT solver provides an accurate indication of the constraints that render the scheduling problem unsolvable.

In general, the analysis of the unsatisfiable core relates to any kind of analysis that relates to the appearance of the elements of the network (e.g nodes, links) in the unsatisfiable core returned by the SMT solver.

The analysis may consist in a simple determination of all the elements that appear in the unsatisfiable core.

The analysis may also consist in a statistical analysis of the unsatisfiable core, e.g an analysis of patterns of the numerical values of appearance of the elements of the network in the unsatisfiable core. Such a statistical analysis may for example consist in a count of the number of appearance of each element, or a relative number of appearance (e.g. percentage, fraction) of each element in the unsatisfiable core.

A statistical analysis may for example be performed on an individual basis (for example by the count of appearance of each node/link), or on a regional basis (for example by counting the number or relative number of appearance of elements of the network in different regions of the network).

The statistical analysis allows determining where the unsatisfiable constraints are located the most frequently, and therefore selecting a modification of the topology of the network that is able to release constraints where they most frequently appear, thereby increasing the likelihood of allowing a successful scheduling of the network and/or diminishing the number of constraints.

The at least one modification may comprise at least one modification of the topology of the network that do not modify the end nodes, and increase the routing and/or traffic handling capabilities of the network. For example, this may comprise one or more increase of the speed of the links, addition of a link, addition of a switch, etc. Thus, any modification that allows the network to handle more traffic and/or provides more routing options for the packets can be used, in order to provide new solutions to the previously unsolvable scheduling problem.

According to various embodiments of the invention, a single modification may be performed at a time, or a plurality of modifications may be performed simultaneously. The network may also be iteratively modified, by adding new modifications until a scheduling solution can be found.

In the step S5, the at least one modification is defined based on the analysis. Stated otherwise, the step S5 identifies at least one modification which is expected to improve the situation in view of the analysis of the unsatisfiable core.

For example, said at least one modification may comprise an increase of the speed of at least one link that appears in the unsatisfiable core.

Modifying the speed (or flow rate) of a link that appears in the unsatisfiable core increases the likelihood that the constraints relative to all packets that transit in the link are satisfied. Meanwhile, this does not require to change the architecture of the network.

For example, the speed of the link which appears the most frequently in the unsatisfiable core may be increased. Alternatively, the speeds of all the links that appear frequently in the unsatisfiable core may be increased, or a percentage of the links that appear the most frequently in the unsatisfiable core, may be increased.

In a number of embodiments of the invention, the modifications may be performed iteratively. Stated otherwise, a first modification, or set of modifications, is performed, then new modifications can be performed until the solver is able to perform a successful execution.

For example, a plurality of iterations of a modification consisting in increasing of the speed of the link which appears the most frequently in the unsatisfiable core may be performed, until the execution of the SMT solver is successful.

Thus, at each iteration, the link that is cited as the most frequent cause of lack of solution is upgraded. Therefore, a solution that implies a modification of a minimal number of links is iteratively obtained.

The increase of the speed of the links is not the only modification that can be performed. For example, modifications of the architecture of the network can be performed.

Modifications of the architecture of the network provide additional degrees of freedom for the modification and allow deeper modification than the sole modification of the speed of the links. Therefore, modifications of the architecture of the network further increase the ability of finding an suitable scheduling for the network.

One possible modification of the architecture of the network is an addition of a link to the network. Such a link can be added between two nodes, for example an end node and a switch, or between two switches.

Adding a link increases the routing options for the packets, and adds transmission capabilities to the network. Therefore, adding a link greatly eases the resolution of the constraints. The path of the streams (i.e. the nodes through which the each stream flows between its sender and its at least one receiver) can be recalculated after the addition of the link in order to fully benefit from the new routing options.

In particular, the new links may be added in regions of the network which appear in the unsatisfiable core.

For example, at least one link that appears in the unsatisfiable core may be duplicated. Such a duplication significantly increases the transmission speed between the nodes, but also allows to send a plurality of packets in the same time between the two nodes through a plurality of links, without causing a collision of the packets. Such operation between two nodes that prevent the solving of the SMT instance greatly increases the likelihood of solving the SMT instance.

Of course, such a duplication may be performed in general for one or more links which appear in the unsatisfiable core, or more specifically for one or more links which appear frequently in the unsatisfiable core (e.g the link which appears the most frequently, a defined percentage or fraction of the links which appear the most frequently, etc.)

Another option for adding a link consists in adding a direct link between two nodes separated by a series of successive of links that all appear in the unsatisfiable core. For example, in the example of figure 1, if the links L6 (between switches SW3 and SW4) and L12 (between switches SW4 and SW8) both appear in the unsatisfiable core, a direct link can be added between switch SW3 and SW8, in addition of the existing links. Indeed, such a situation is a hint that one or more streams using both links L6 and L12 prevent the identification of a suitable solution to the scheduling problem, and more generally that congestion occurs in all the links between the two nodes. Thus, the addition of the direct link allow such streams to use the direct link, and therefore reduces the congestion in all the link of the series of successive links. If this solution has been exemplified here with a series of two successive links, it can of course be performed for a series of more than two successive links, for example 3, 4, 5 links, etc.

Another possible modification of the architecture is addition of a switch in an area of the network that comprises a plurality of links that appear in the unsatisfiable core.

Indeed, adding a switch increases the number of possible routing options between the links, and therefore contributes to ease the solving the of SMT instance.

Of course, a plurality of modifications of the architecture of the network can be performed simultaneously.

It is apparent that, in step S5, a plurality of different modifications of the topology of the network can be defined, and a single or a plurality of modifications can be performed at a time. Thus, the term modification may refer both to a single modification, or a plurality of elementary modifications performed simultaneously (e.g a plurality of addition of links, modification of the speed of links, addition of nodes, etc.).

It is also apparent that, in some cases, a plurality of candidate modifications may be considered in a given situation. Thus, a plurality of candidate modifications may be proposed to a user for choice / validation.

In an example, a plurality of candidate modifications (or candidate sets of a plurality of elementary modifications) may be automatically generated from the analysis, and each candidate modification may be applied and tested, by executing the SMT solver on a SMT instance modified according to the candidate modification.

Then, the candidate modifications that cause a successful execution of the SMT solver are displayed to the user, and an input is received from the user to select a candidate modification, and define the selected candidate modification as the modification to perform.

Thus, the user is prompted to perform a choice among modifications that all cause a successful execution of the SMT instance. Thus, the selected modification will define a modification of the topology of the network that complies with the real-time constraints of the streams, and is validated/selected by a user. Furthermore, the user is presented with a limited choice of successful candidate modifications.

In another embodiment, a plurality of candidate modifications are automatically generated based on the analysis, and displayed to the user.

Then, an input relative to a selection of one of the candidate modifications is received from the user, and the selected candidate modification is selected as the modification to apply.

In this case, the candidate modifications that are displayed to the user are not previously filtered. Thus, this lets more freedom to an expert user to select a candidate modification that is considered as the most appropriate.

It is now referred to figure 3.

The figure 3 represents a second example of a method according to an embodiment.

The method P3 comprises all the steps of the method P2. In addition of the steps of the method P2, the method P3 comprises, until the execution of the SMT solver is successful, at least one iteration of application of the modifications, and return to the step of execution of the solver.

More specifically, if the execution of the solver is not successful at steps S3 and S4, the method P2 comprises, at the output of step S5, a step S7 of applying said at least one modification of the topology of the network.

In substance, the step S7 applies the modification identified at step S5, for example the architecture of the network and/or speed of the links. The step S7 may further comprise a sub-step of re-calculating the routing of the streams. For example, if the architecture of the network has been modified, the routes, or paths, of the stream can be modified accordingly to benefit from the new options allowed by the modified architecture (for example, the ability to use new links).

At the output of step S7, the method P3 comprises a step S8 of modifying the SMT instance according to said at least one modification of the topology of the network. In substance, the step S8 consists in modifying the SMT instance according to the modification of the topology of the network and, if applicable, the updated routing of the streams.

Then, the method P3 goes back to step S3.

Thus, a plurality of successive iterations of modification of the topology of the network can be performed, until all the constraints are satisfied. The analysis of the unsatisfiable core in this case allows iteratively identifying successive modifications to perform until the SMT solver identifies a solution for meeting the constraints.

On the other hand, if the step execution of the SMT solver is declared successful at step S4, the method P3 comprises a step S6 of configuring the network according to said topology and said obtained values defining the configuration of the network.

In substance, the step S6 may comprise physically manufacturing or adapting the network according to the topology and/or defining the values of the gates of the switches according to the configuration of the network.

If the network has not yet be physically produced at this stage, the step S6 may comprise a sub-step of manufacturing the network according to the topology at the output of the latest execution of step S7, or the initial topology if it has not been modified.

If the network is already physically produced, but the topology has been modified at step S7, the step S6 may comprise physically adapting the topology of the network, for example by modifying the links to take into account the increase of the flow rates of the links, adding links, adding switches, etc. Stated otherwise, the modifications of the topology at steps S5 and S7 may relate to a modification of model representation of the topology, while in step S6 the topology may be physically applied to a network, either by a manufacturing of the network according to the topology, or by a physical adaptation of an existing network.

The step S6 also comprises a substep of defining the values of the gates of the switches according to the configuration of the network. This may for example be performed by setting the values of the GCL (Gate Control List) of the switches according to the configuration, so as to ensure that the streams will be scheduled in order to fulfill the real time requirements of the network.

It can be appreciated that the examples of configuration of the step S6 described above are provided by means of example only, and that, in general, the step S6 can encompass any sub-step that allow physically obtaining a network which is compliant with both the initial topology or topology as modified in step S7 and configuration obtained at step S3. The skilled man could easily envision what may be the necessary steps to perform in a given situation (e.g network already physically manufactured or not, modified or not, etc.).

It can also be appreciated that, although step S6 has been represented in figure 3 in conjunction to the loop of steps S7, S8, and the return to step S3, it can be implemented independently of the loop.

For example, the step S6 could be added to the method P2 if the execution is declared successful at step S4, or it could be combined with other modification steps than the loop of steps S7, S8, and the return to step S3 in case the execution is not declared successful. For example, the step S6 may be executed after step S5, in embodiment wherein the modification is selected among modification that cause a successful execution of the SMT solver.

It is now referred to figure 4.

Figure 4 represents a second example of a Time Sensitive Network for the scheduling of which the invention can be implemented according to an embodiment.

The network Net4 comprises:

- 4 end nodes N40, N41, N42 and N43 ;

- 4 switches N44, N45, N46 and N47.

A plurality of experiments has been conducted on the network Net4 to demonstrate the ability of the invention to modify the topology of the network.

The initial topology of the network is defined by the architecture represented in figure 4, and the features listed below:

- macro-tick (elementary time unit) of the network is 1000 ns
- all links are 10 meters long and have a data-rate of 100Mb/s

The specification of the critical streams is the following:

- all streams have a period of 100,000ns and an end-to-end delay of 100,000ns ;
- all streams should send one packet of size 158B during their periods ;
- stream 0 has a path N40→SW44→ SW45→N41 and should start after stream 2 ;
- stream 1 has a path N40→ SW44→ SW46→N42 ;
- stream 2 has a path N40→ SW44→ SW46→ SW47→N43 and should start after stream 1 ;
- stream 3 has a path N41→ SW45→ SW44→N40 ;
- stream 4 has a path N41→ SW45→ SW44→ SW46→N42 and should start after stream 3 ;
- stream 5 has a path N41→ SW45→ SW47→N43 and should start after stream 4 ;
- stream 6 has a path N42→ SW46→ SW44→N40 and should start after stream 7 ;
- stream 7 has a path N42→ SW46→ SW47→ SW45→N41 and should start after stream 8 ;
- stream 8 has a path N42→ SW46→ SW47→N43 ;
- stream 9 has a path N43→ SW47→ SW45→ SW44→N40 and should start after stream 10 ;
- stream 10 has a path N43→ SW47→ SW45→N41 ;
- stream 11 has a path N43→ SW47→ SW46→N42 and should start after stream 9.

The initial scheduling problem defined above is solvable by a SMT solver. Four experiments are described below to make the problem unsolvable, then let a method according to the invention find modifications of the topology of the network that make the problem solvable again, and thus the network scheduling. The example below will show the output of a test program aimed at testing some embodiments of the invention.

In all the experiments, the problem is modified in order not to be solvable. Then, the test program runs an embodiment of the invention comprising a plurality of iterations of counting the number of occurrences of citations of links in the unsatisfiable core (e.g. a link is cited each time a constraints which cannot be satisfied is related to the link), and upgrades of the speed of the link which is the most frequently cited in the unsatisfiable core, until the problem is solvable.

First experiment.

In the first experiment, the TSN problem is made unsolvable by upgrading the size of packets to 182B.

The output of the program is reproduced below:

```
[Info] First TSN problem example modified with packets size updated to 182B
[Info] Size of messages = 182 Bytes.
[Info] Total number of constraints: 232
[Info] Z3 solving
[Info] No solution was found.
[Info] Trying to find an explanation for unsolvability...
[Info] Z3 solving
[Info] Unsat core contains 16 constraints (out of 232)
[Info] Links that prevent finding a scheduling:
        link #10 (38%) +++++++++++++++++++++++++++++++++++++
        link #00 (22%) ++++++++++++++++++++++
        link #14 (22%) ++++++++++++++++++++++
        link #02 (05%) +++++
        link #08 (05%) +++++
        link #12 (05%) +++++
[Info] Upgrading link 10 from 100Mb/s to 400Mb/s
[Info] Z3 solving
[Info] No solution was found.
[Info] Trying to find an explanation for unsolvability...
[Info] Z3 solving
[Info] Unsat core contains 16 constraints (out of 232)
[Info] Links that prevent finding a scheduling:
        link #00 (38%) +++++++++++++++++++++++++++++++++++++
        link #05 (22%) ++++++++++++++++++++++
        link #11 (22%) ++++++++++++++++++++++
        link #06 (05%) +++++
        link #08 (05%) +++++
        link #13 (05%) +++++
[Info] Upgrading link 0 from 100Mb/s to 400Mb/s
[Info] Z3 solving
```

```
[Info] No solution was found.
[Info] Trying to find an explanation for unsolvability...
[Info] Z3 solving
[Info] Unsat core contains 34 constraints (out of 232)
[Info] Links that prevent finding a scheduling:
       link #02 (20%) +++++++++++++++++++
       link #15 (14%) ++++++++++++++
       link #04 (11%) +++++++++++
       link #08 (11%) +++++++++++
       link #07 (10%) ++++++++++
       link #05 (09%) +++++++++
       link #00 (08%) ++++++++
       link #10 (08%) ++++++++
       link #09 (03%) +++
       link #11 (02%) ++
       link #13 (02%) ++
       link #14 (02%) ++
[Info] Upgrading link 2 from 100Mb/s to 400Mb/s
[Info] Z3 solving
[Info] Trying to find an explanation for unsolvability...
[Info] Z3 solving
[Info] Unsat core contains 16 constraints (out of 232)
[Info] Links that prevent finding a scheduling:
       link #05 (38%) ++++++++++++++++++++++++++++++++++++++
       link #01 (22%) ++++++++++++++++++++++
       link #15 (22%) ++++++++++++++++++++++
       link #03 (05%) +++++
       link #07 (05%) +++++
       link #13 (05%) +++++
[Info] Upgrading link 5 from 100Mb/s to 400Mb/s
[Info] Z3 solving
[Info] Found a global solution!
[Info] Summary of links data rates changes:
       Link 10 from 100Mb/s to 400Mb/s
       Link 0 from 100Mb/s to 400Mb/s
       Link 2 from 100Mb/s to 400Mb/s
       Link 5 from 100Mb/s to 400Mb/s
```

Stated otherwise:

- at the first iteration, the execution of the SMT solver was unsuccessful, and link 10 was the most frequently cited (38% of occurrences) in the unsatisfiable core, so it was upgraded from 100 Mb/s to 400 Mb/s ;

- at the second iteration, the execution of the SMT solver was unsuccessful, and link 00 was the most frequently cited (38% of occurrences) in the unsatisfiable core, so it was upgraded from 100 Mb/s to 400 Mb/s ;

- at the third iteration, the execution of the SMT solver was unsuccessful, and link 02 was the most frequently cited (38% of occurrences) in the unsatisfiable core, so it was upgraded from 100 Mb/s to 400 Mb/s ;

- at the fourth iteration, the execution of the SMT solver was unsuccessful, and link 05 was the most frequently cited (38% of occurrences) in the unsatisfiable core, so it was upgraded from 100 Mb/s to 400 Mb/s ;

- at the fifth iteration, thanks to the link upgrades, the execution of the SMT solver was successful, which means that, based on the modified topology, a configuration of the network that complies with all constraints can be found.

The first example demonstrates that an iterative upgrade of the speed of the link that is most frequently cited in the unsatisfiable core allows modifying the topology so that the problem is solvable, using a limited number of link upgrades. This is because the link that is the most frequently cited in the unsatisfiable core at each iteration can be expected to be the most prominent of lack of solution.

Second experiment.

The second experiment is similar to the first experiment, but the size of the is upgraded to 282B instead of 182B.

The reader being now familiar with the output of the test program, only the modification of the problem and the summary are reproduced below:

```
[Info] First TSN problem example modified with packets size updated to 282B
[Info] Summary of links data rates changes:
        Link 0 from 100Mb/s to 400Mb/s
        Link 0 from 400Mb/s to IGb/s
        Link 10 from 100Mb/s to 400Mb/s
        Link 2 from 100Mb/s to 400Mb/s
        Link 5 from 100Mb/s to 400Mb/s
        Link 5 from 400Mb/s to 1Gb/s
        Link 15 from 100Mb/s to 400Mb/s
        Link 1 from 100Mb/s to 400Mb/s
        Link 8 from 100Mb/s to 400Mb/s
        Link 13 from 100Mb/s to 400Mb/s
```

As in the first experiment, the problem was solvable after a plurality of iterations. However, the size of the packets being even bigger, and thus the scheduling problem more complex, more links upgrades need to be performed: 8 links need to be upgraded (instead of 4 in the first experiment), and links 0 and 5 need to be upgraded up to 1Gb/s.

Third experiment

In the third experiment, the size of the packets is back to 158B, but the stream #0 is duplicated.

The reader being now familiar with the output of the test program, only the modification of the problem and the summary are reproduced below:

```
[Info] First TSN problem example modified with stream 0 duplicated
[Info] Summary of links data rates changes:
        Link 0 from 100Mb/s to 400Mb/s
```

In this case, only link 0 needs to be upgraded to make the problem solvable.

Fourth experiment

In the fourth experiment, all the 12 streams of the initial problem are duplicated.

The reader being now familiar with the output of the test program, only the modification of the problem and the summary are reproduced below:

```
[Info] First TSN problem example modified with all streams duplicated
[Info] Summary of links data rates changes:
        Link 14 from 100Mb/s to 400Mb/s
        Link 10 from 100Mb/s to 400Mb/s
        Link 5 from 100Mb/s to 400Mb/s
        Link 13 from 100Mb/s to 400Mb/s
        Link 11 from 100Mb/s to 400Mb/s
        Link 15 from 100Mb/s to 400Mb/s
        Link 2 from 100Mb/s to 400Mb/s
        Link 7 from 100Mb/s to 400Mb/s
        Link 0 from 100Mb/s to 400Mb/s
```

As expected, the modifications needed to make the problem solvable are much deeper than in the third experiment, since no less than 9 links need to be upgraded in order to make the problem solvable.

These examples demonstrate the ability of the invention to modify the topology of a network to make the scheduling problem solvable, and therefore ensure that the real-time requirements of the streams can be fulfilled.

This disclosure is not limited to the method, device, and computer program described here, which are only examples. The invention encompasses every alternative that a person skilled in the art would envisage when reading this text.

**Claims**

1. A computer-implemented method (P2) comprising:

    - obtaining (S1):

        - a topology of a deterministic Ethernet network (Net); and
        - a set of critical streams to instantiate in the network, each critical stream being defined by at least a path, a period, a maximum allowed end-to-end latency, a set of packets, each packet being associated to a size ;

    - generating (S2), from said set of critical streams, a SMT instance comprising formulas that express the constraints that must be complied with by the transmissions of the packets of the streams, and variables defining the configuration of the network ;
    - executing (S3) a SMT solver to solve the SMT instance and obtain values of said variables defining the configuration of the network that satisfies the set of formulas ;
    - if the execution of the SMT solver is not successful (S4), defining (S5) at least one modification of the topology of the network based on an analysis of an unsatisfiable core of the SMT instance returned by the SMT solver.

2. The computer-implemented method of claim 1 comprising, if the execution of the SMT solver is successful (S4), configuring (S6) the network according to said topology and said obtained values defining the configuration of the network.

3. The computer-implemented of claim 1, comprising, until the execution of the SMT solver is successful, at least one iteration of:

    - applying (S7) said at least one modification of the topology of the network ;
    - modifying (S8) said SMT instance according to said at least one modification of the topology of the network ;
    - going back to said step of executing (S3) the SMT solver.

4. The computer-implemented method of the preceding claim, wherein said step of defining at least one modification of the topology of the network based on said analysis of the unsatisfiable core of the SMT instance returned by the SMT solver comprises:

    - defining a plurality of candidate modifications of the topology of the network based on the analysis of the unsatisfiable core of the SMT instance ;
    - for each candidate modification of the topology of the network of said plurality of candidate modifications respectively:

        - applying said candidate modification to said SMT instance to obtain a modified SMT instance ;
        - executing the SMT solver on said modified SMT instance;

    - displaying the candidate modifications of the topology of the network that cause a successful execution of the SMT solver ;
    - receiving an input relative to a selection of one of said candidate modifications of the topology of the network that cause a successful execution of the SMT solver :
    - defining said at least one modification of the topology of the network as the selected candidate modification of the topology of the network.

5. The computer-implemented method of any of the claims 1 to 4, wherein said step of defining at least one modification of the topology of the network based on said analysis of the unsatisfiable core of the SMT instance returned by the SMT solver comprises :

    - defining a plurality of candidate modifications of the topology of the network based on the analysis of the unsatisfiable core of the SMT instance ;
    - displaying said plurality of candidate modifications of the topology of the network ;
    - receiving an input relative to a selection of one of said candidate modifications of the topology of the network ;
    - defining said at least one modification of the topology of the network as selected candidate modification of the topology of the network.

6. The computer-implemented method of any of the preceding claims, wherein said analysis is a statistical analysis.

7. The computer-implemented method of any of the preceding claims, wherein said at least one modification comprises an increase of the speed of at least one link that appears in the unsatisfiable core.

8. The computer-implemented method of any of the preceding claims, comprising a plurality of iterations of a modification consisting in increasing of the speed of the link which appears the most frequently in the unsatisfiable core, until the execution of the SMT solver is successful.

9. The computer-implemented method of any one of the preceding claims, wherein said at least one modification of the topology of the network comprises at least one modification of the architecture of the network.

10. The computer-implemented method of claim 9, wherein said at least one modification of the architecture of the network comprises at least one an addition of a link to the network.

11. The computer-implemented method of the preceding claim wherein said at least one addition comprises a duplication of at least one link that appears in the unsatisfiable core.

12. The computer-implemented method of one of claims 10 or 11, wherein said at least one addition comprises an addition of a direct link between two nodes separated by a series of successive links that all appear in the unsatisfiable core.

13. The computer-implemented method of any claims 9 to 12, wherein said at least one modification of the architecture of the network comprises an addition of a switch in an area of the network that comprises a plurality of links that appear in the unsatisfiable core.

14. Computer software comprising instructions to implement at least a part of a method according to one of claims 1 to 13 when the software is executed by a processor.

15. Computer-readable non-transient recording medium on which a software is registered to implement a method according to one of claims 1 to 13 when the software is executed by a processor.

FIG. 1

EP 4 440 072 A1

```
S1 ──  Obt top, strms

           │
           ▼

S2 ──  Gen SMT inst

           │
           ▼

S3 ──  Exec SMT solv

           │
           ▼

S4 ──  < Succ? >
           │ No
           ▼

S5 ──  Def Mod Top
```

P2

# FIG. 2

S1 — Obt top, strms

S2 — Gen SMT inst

S3 — Exec SMT solv

S4 — Succ? — Yes — Config    S6

No

S5 — Def Mod Top

S7 — App Mod Top

S8 — Mod SMT inst

P3

**FIG. 3**

N40

N42

SW44

SW46

SW45

SW47

N41

N43

Net4

# FIG. 4

Europäisches
Patentamt

European
Patent Office

Office européen
des brevets

## EUROPEAN SEARCH REPORT

Application Number

EP 23 30 5435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FARZANEH MORTEZA HASHEMI ET AL: "A graphical modeling tool supporting automated schedule synthesis for time-sensitive networking", 2017 22ND IEEE INTERNATIONAL CONFERENCE ON EMERGING TECHNOLOGIES AND FACTORY AUTOMATION (ETFA), IEEE, 12 September 2017 (2017-09-12), pages 1-8, XP033292933, DOI: 10.1109/ETFA.2017.8247599 [retrieved on 2018-01-04] * abstract; figures 1-5; tables 1-4 * * the whole document * ----- | 1-15 | INV. H04L45/302 G06N5/01 H04L41/12 H04L45/00 H04L45/42 H04L47/56 |
| X | Farzaneh Morteza Hashemi: "A Modeling Framework to Facilitate Schedule Synthesis of Time-Sensitive Networking", KATALOG DER DEUTSCHEN NATIONALBIBLIOTHEK, 29 March 2019 (2019-03-29), pages 1-165, XP093075368, Retrieved from the Internet: URL:https://d-nb.info/1193650380/34 [retrieved on 2023-08-22] * abstract * * Section 3 Approach Overview; page 37 – page 45 * * Section 4 Model-based Schedule Synthesis; Section 5 Model Correction and Optimisation; page 51 – page 92 * ----- -/-- | 1-15 | |

|  |  |  | TECHNICAL FIELDS SEARCHED (IPC) |
|---|---|---|---|
|  |  |  | H04L |

The present search report has been drawn up for all claims

| Place of search | Date of completion of the search | Examiner |
|---|---|---|
| The Hague | 22 August 2023 | Cranley, Nikki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 23 30 5435

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LI ZONGHUI ET AL: "An Enhanced Reconfiguration for Deterministic Transmission in Time-Triggered Networks", IEEE /ACM TRANSACTIONS ON NETWORKING, IEEE / ACM, NEW YORK, NY, US, vol. 27, no. 3, 30 June 2019 (2019-06-30), pages 1124-1137, XP011730284, ISSN: 1063-6692, DOI: 10.1109/TNET.2019.2911272 [retrieved on 2019-06-14] * Sections 1-III; page 1124 - page 1127 * * Section IV Implementation for Reconfiguration Model - A. Create Dependence Graph; B. Breaking Dependence; page 1130 - page 1131 * ----- | 1-15 | |
| A | THOMAS ST\"UBER ET AL: "A Survey of Scheduling Algorithms for the Time-Aware Shaper in Time-Sensitive Networking (TSN)", ARXIV.ORG, CORNELL UNIVERSITY LIBRARY, 201 OLIN LIBRARY CORNELL UNIVERSITY ITHACA, NY 14853, 27 March 2023 (2023-03-27), XP091573439, DOI: 10.1109/ACCESS.2023.3286370 * Section F.1 Optimisation Methods - Exact Methods: ILP, SMT, CP, PBO; page 8 - page 9 * * page 11, column 1, paragraph 3 - page 11, column 2, paragraph 3 * * 6. GCL Synthesis; 7. Task Scheduling; page 16, column 1, paragraph 1 * ----- | 1-15 | TECHNICAL FIELDS SEARCHED (IPC) |

The present search report has been drawn up for all claims

| Place of search | Date of completion of the search | Examiner |
|---|---|---|
| The Hague | 22 August 2023 | Cranley, Nikki |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23305434

**Non-patent literature cited in the description**

- **CRACIUNAS, S. S. ; OLIVER, R. S. ; AG, T.** An overview of scheduling mechanisms for time-sensitive networks. *Proceedings of the Real-time summer school LÉcole dÉté Temps Réel (ETR),* 2017, 1551-3203
- *Time-Sensitive Networking Task Group,* 2016, http://www.ieee802.org/1/pages/tsn.html

- *802.1Qbv-Enhancements for Scheduled Traffic,* 2016, http://www.ieee802.org/1/pages/802.1bv.html
- **CRACIUNAS, S.S. ; OLIVER, R.S.** *An Overview of Scheduling Mechanisms for Time-sensitive Networks,* 2017